# EUROPÄISCHE PATENTSCHRIFT

(11) **EP 1 558 978 B1**
(45) Veröffentlichungstag und Bekanntmachung des Hinweises auf die Patenterteilung: **12.04.2006**
(21) Anmeldenummer: 03810435.2
(22) Anmeldetag: 04.11.2003
(51) Int. Cl.: G05D 7/01, F16K 1/44

(54) **VENTILEINHEIT, VERFAHREN ZUR HERSTELLUNG UND VERWENDUNG EINER VENTILEINHEIT**
VALVE UNIT, METHOD FOR PRODUCING AND USING A VALVE UNIT
ENSEMBLE SOUPAPE, PROCEDE DE FABRICATION ET UTILISATION ASSOCIES

(30) Priorität: 04.11.2002 DE 10251221
(43) Veröffentlichungstag der Anmeldung: 03.08.2005
(73) Patentinhaber: SIEMENS AKTIENGESELLSCHAFT, 80333 München (DE)
(72) Erfinder: BACHMAIER, Georg, 80538 München (DE); FISCHER, Bernhard, 84513 Töging A. Inn (DE); GOTTLIEB, Bernhard, 81739 München (DE); KAPPEL, Andreas, 85649 Brunnthal (DE); ULIVIERI, Enrico, 81541 München (DE)
(86) Internationale Anmeldenummer: PCT/EP2003/012292
(87) Internationale Veröffentlichungsnummer: WO 2004/042486

(56) Entgegenhaltungen:
- EP-A- 1 170 500
- DE-A- 19 654 417
- US-A1- 2002 088 958

## Beschreibung

Die Erfindung betrifft eine Ventileinheit.

Ein Mass Flow Controller (MFC) ist ein "gas flow rate control valve" das beispielsweise in der Halbleiterindustrie und bei der Lichtwellenleiterfertigung ("Optical Fiber Industry") für die Einstellung und Regelung von Gasströmen benutzt wird. Ein MFC soll den Gasfluss kontrollieren und einen gewünschten Fluss einregeln. EP 1170500 zeigt eine Einheit mit den wesentlichen Merkmalen des Hauptanspruches

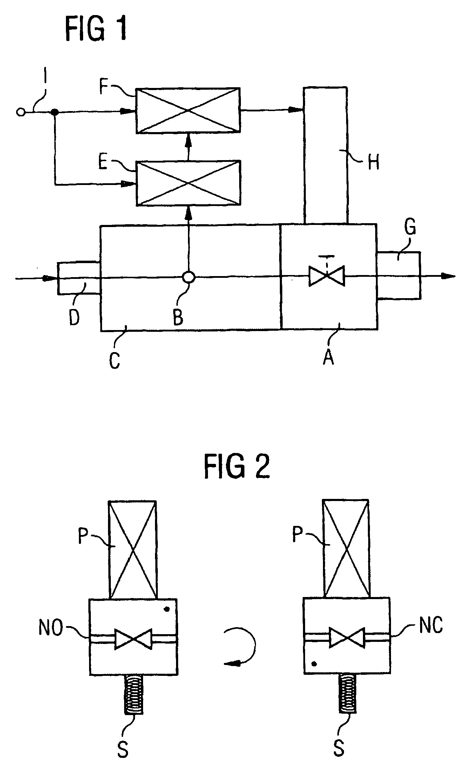

Ein typischer Aufbau eines MFC-Schemas wird in Figur 1 gezeigt. Der MFC besteht aus verschiedenen mechanischen und elektronischen Teilen, die zusammen das Ziel einer Gasströmungsregelung verwirklichen. Das Ventil A dass den Fluss kontrolliert, wird von einem Aktor H betrieben und entscheidet welche Menge Gas vom Eingang D zum Ausgang G fließen soll. Das Eingangsspannungssignal des Aktors wird von einer Endstufe F und einem Regler E, normalerweise mittels einer Feedback-Schleife, generiert. Ein Teil der Informationen für die Feedback-Regelung kommt von den MFC-Sensoren B im By-Pass C und von den Einstellungs- und/oder Sollwerten die der Benutzer vorgegeben hat. Der gesamte MFC ist mit einer Stromversorgung I versehen.

Es gibt wie in grundsätzlich zwei verschiedene Typen von MFC Ventilen, die zwei verschiedne Betriebsarten repräsentieren: Normally Open (NO) Ventile und Normally Closed (NC) Ventile. Im Falle "NO" ist das Ventil offen wenn der MFC nicht angesteuert ist (Null Position) und geschlossen wenn am MFC eine maximale Spannung anliegt. Im Gegensatz dazu ist im Falle eines NC-Ventils das Ventil geschlossen wenn der MFC nicht angesteuert ist (Null-Posititon) und offen wenn am MFC eine maximale Spannung anliegt. Die Betriebsarten schließen sich allerdings gegenseitig aus. Die gewünschte Betriebsart muss also vor der Montage festgelegt werden. Entsprechend werden MFCs normalerweise mit verschiedenen Konstruktionen und Geometrien hergestellt. Somit werden auch verschiedene Bauteile und Montageverfahren verwendet, welche Konsequenzen für Produktionskosten, Lagerhaltung und Lieferfristen nach sich ziehen. Insbesondere führt die Abhängigkeit von der Betriebsart des MFCs zu den folgenden Nachteilen:
- erhöhte Produktionskosten, da verschiedene Bauteile herstellt werden müssen,
- erhöhte Lagerkosten, da eine größere Anzahl von Teiletypen auf Lager gehalten werden müssen,
- erhöhter Zeitaufwand, da der MFC erst nach Bestellung des Kunden gemäß der vom ihm ausgewählten Betriebsart montiert werden kann.

Die der Erfindung zugrunde liegende Aufgabe liegt darin, eine vielseitige Ventileinheit anzugeben, welche einfach herzustellen ist, und mindestens eine "normally open" (NO) und eine "normally closed" (NC), d.h., eine im Ruhezustand offene und eine im Ruhezustand geschlossene Funktion aufnehmen kann.

Die Aufgabe wird hinsichtlich der Ventileinheit, der Verwendung der Ventileinheit und des Herstellungsverfahrens der Ventileinheit durch die Merkmale jeweiligen unabhängigen Ansprüche gelöst.

Die Ventileinheit (1) umfasst in ihrer wesentlichsten Form
- ein hohlzylinderförmiges Gehäuse (2) dessen Innenraum an beiden Stirnseiten mit jeweils einer Membrane (8,9) abgedichtet ist und die Gehäusewand mit einem Einlass (5) und einem Auslass (4) für ein Fluid versehen ist,
- einen im Gehäuseinnenraum axial bewegbaren zylinderförmigen Drosselkörper (3), der mit seinen Endflächen an die Membranen (8,9) angrenzt und aus einem Zentralstift (3a) besteht welcher in mindestens einem Bereich einen vergrößerten Querschnitt (3b, 3c, 3f) aufweist, wobei in diesem Bereich im wesentlichen axial ausgerichtete mindestens zwei Flächen (3d) ausgebildet sind,
- zwei Ventilsitzflächen (6A) welche an der Gehäuseinnenwand ausgebildet sind wovon mindestens eine der Ventilsitzflächen (6A) und / oder mindestens eine axiale Fläche (3d) des vergrößerten Querschnitts des Drosselkörpers (3b, 3c, 3f) mit Fluid-Kanälen (3e) versehen ist,
- der mindestens eine Bereich des vergrößerten Querschnitts des Drosselkörpers (3b, 3c, 3f) mit den Ventilsitzflächen in Abhängigkeit von der Stellung des Drosselkörpers (3) zusammenwirkt,
- der Drosselkörper (3) von einem von außen wirkenden Hub, welcher über eine Membrane (8,9) von einem Aktor (11) einleitbar ist, und gleichzeitig durch eine von außen wirkende Rückstellkraft, welche über eine Membrane (8,9) von einem Rückstellelement (10) einleitbar ist, beaufschlagbar ist.

Die Ventileinheit wird optimal in einer Dosiervorrichtung, insbesondere in einem MFC, also zur Durchlassregulierung eines Fluids, eingesetzt. Die Stirnflächen des Drosselkörpers der Ventileinheit einerseits mit einem Hub eines Piezoaktors, und andererseits von einer Rückstellkraft einer Rückstellfeder oder eines zweiten Aktors beaufschlagt werden.

Die Ventileinheit wird auch derart verwendet, dass vor Endmontage der Ventileinheit in die Dosiervorrichtung eine der Betriebsarten
- im Ruhezustand geschlossen (NC)
- im Ruhezustand geöffnet (NO)
ausgewählt werden kann.

Es ergibt sich hier der Vorteil, dass ein Benutzer ohne besondere Vorplanung eine Ventileinheit nach dem oben beschriebenen, wesentlichen Aufbau bestellen kann und anschließend aber auswählen kann, welche Betriebsart die Ventileinheit in einem Bausatz ausführen soll.

Genauer kann ausgewählt werden, in welcher Orientierung die Ventileinheit zwischen einem Aktor und einer Rückstellelement angeordnet ist, d.h. ob eine erste Stirnseite des Drosselkörpers mit einem Piezoaktor oder mit einem Rückstellelement zusammenwirkt. Die Orientierung der Ventileinheit zwischen diesen Elementen kann dann die Funktion der Ventileinheit bestimmen.

Beim Verfahren zur Herstellung der hier beschriebenen Ventileinheit werden folgende Schritte ausgeführt:
- Herstellung eines rohen Hohlzylindergehäuses,
- Herstellung eines Ventilsitzes in Form eines Ringes,
- Einfügung, Befestigung und Positionierung mindestens eines Ventilsitzes in den Innenraum des Gehäuses,
- Einfügung in das Gehäuse eines Teils eines Drosselkörpers, sodass eine Fläche des vergrößerten Querschnitts des Drosselkörpers auf einen Ventilsitz anliegt,
- Einfügung eines zweiten Ventilsitzes um den Drosselkörper einzuklammern oder
- Aufsetzen eines Endes eines Drosselkörpers mit vergrößertem Querschnitt auf den Zentralstift um den Ventilsitz einzuklammern
- Fixierung der Membranen an den Stirnseiten des Gehäuses

Es ergibt sich der Vorteil, dass der Ventilsitz vor Einbau in das Gehäuse exakt und sauber vorbereitet werden kann und somit die aufwendige und ungenaue Bearbeitung eines Ventilsitzes, welcher beispielsweise bereits von einem Gehäuse umhüllt wäre, erspart wird. Die Bearbeitung des Gehäuses in roher Form ohne Ventilsitz ist dabei auch ein Vorteil, da beispielsweise Strukturen an der Innenwand des Gehäuses ohne Störung einfach einzuarbeiten sind.

Weitere Vorteile der Erfindung werden anhand der Ausführungsbeispiele angegeben. Die folgenden Figuren erläutern dabei die verschiedenen Ausführungsformen der Erfindung.

Dabei zeigt
- Figur 2: schematischer Aufbau einer Dosiervorrichtung mit einer Ventileinheit, welche sowohl eine NO und eine NC Rolle übernehmen kann.
- Figur 3: Beispiel einer Ventileinheit
- Figur 4: hantelförmiger Drosselkörper mit Durchbohrungen und Kanalisierung
- Figur 5: Verschiedene Betriebsarten des Ventils
- Figur 6: Längenverhältnis zwischen Zentralstift des Drosselkörpers und Drosselkörperführung des Gehäuses
- Figur 7: Ventileinheit mit zweiteiligem Drosselkörper
- Figur 8: zweiteiliger Drosselkörper mit Durchbohrungen und Kanalisierung
- Figur 9: Unterschiedliche Durchbohrungsmöglichkeiten und entsprechende Betriebsarten einer Ventileinheit
- Figur 10: Ventileinheit mit dargestellter Widerstandsfläche eines Ventilsitzes
- Figur 11: Variierte Ventilsitze mit entsprechend dargestellte Strömungswiderständen
- Figur 12: symmetrischer und anti-symmetrischer Ventilsitz mit Abnehmungen
- Figur 13: Ventilsitz mit Nuten, variierter Innen- und Außendurchmesser, Einbau des Ventilsitzes in der Ventileinheit
- Figur 14: Verfahren zur Durchbohrung eines Gehäuses für eine Ventileinheit
- Figur 15: fertig hergestelltes Gehäuse
- Figur 16: ein in einem von Gehäuse separaten Vorgang hergestellter Ventilsitz mit unterschiedlichen Abnehmungen
- Figur 17: Einbau des Ventilsitzes in ein Gehäuse mit Innenkante
- Figur 18: Kombination von Ein- und Auslass des Gehäuses mit Ventileinheit

### Ventileinheit

**Figur 2** zeigt wie die vielseitige Ventileinheit als eine unabhängige Einheit gebaut und auf zweierlei Weise an den Antrieb montiert werden kann um die zwei Betriebsarten, NO und NC, zu ermöglichen. Dabei kann ein Piezoaktor P mit der Ventileinheit (NC, NO) verbunden sein, und eine Feder oder ein Piezoaktor S auf der dem Piezoaktor P gegenüberliegenden Seite der Ventileinheit, verbunden sein. Die schwarzen Punkte in den Ventileinheiten dieser Figur stellen die Funktion bzw. Orientierung, der Ventileinheit dar. Der Aktor ist vorzugsweise ein Festkörperaktor wie beispielsweise ein e-lektrostriktives oder magnetostriktives Element.

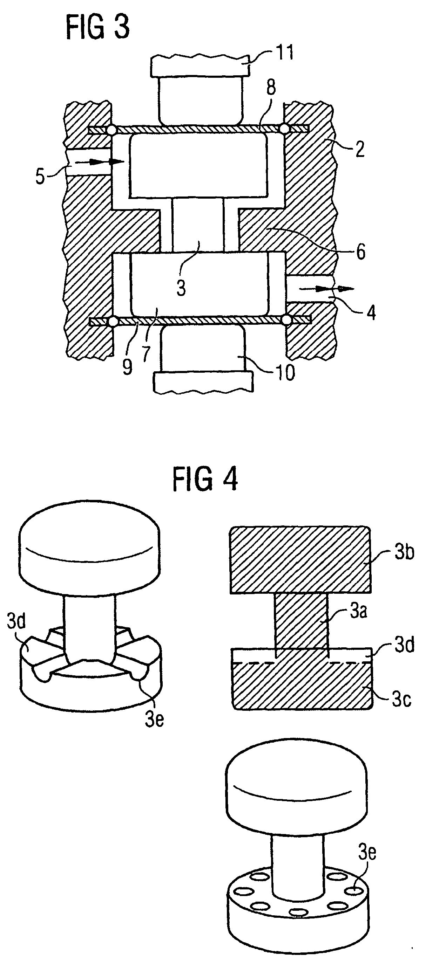

In **Figur 3** besteht die vielseitige Ventileinheit 1 aus einem Drosselkörper 3, der in ein rohrförmiges Gehäuse 2 eingefügt ist und der an zwei elastischen Membranen 8,9 angrenzt. Die Membranen dichten das Ventil 1 an seinen Stirnseiten ab und lassen das Fluid nur von dem Eingang 5 zum Ausgang 4 strömen. Das Fluid strömt in einer offenen Stellung des Ventils durch einen Spalt zwischen dem Drosselkörper und dem Gehäuse, bzw. an den Ventilsitzflächen 6, welche hier auch einfach als Ventilsitze 6 bezeichnet werden, vorbei. Der Drosselkörper 3 wird vom einem von außen wirkenden Aktor 11 und von einer von außen wirkenden Feder 10 bewegt, wobei beide Kräfte über die Membranen übertragen werden.

Der hantelförmige Drosselkörper aus Figur 4 besteht aus den folgenden Teilen:
- ein Zentralstift 3a,
- eine erste Kappe 3b welche einen vergrößerten Querschnitt gegenüber dem Zentralstift aufweist,
- eine zweite Kappe 3c mit einem Querschnitt wie oben.

Die Kappen 3b und 3c, welche an den Enden des Zentralstifts mit vergrößertem Querschnitt angeordnet sind, bilden eine geometrische Klammer um die zwei Ventilsitzflächen 6A des Gehäuses, wobei die Einklammerung der Ventilsitzflächen mittels der Enden des Zentralstifts einen Spielraum für die Verschiebung des Drosselkörpers erlaubt.

Die Kappen 3b und 3c können an ihren axial ausgerichteten Flächen 3d Kanäle 3e aufweisen, welche den Durchfluss eines Fluids zwischen dem Drosselkörper 3 und dem Ventilsitz 6 ermöglichen, auch wenn eine der Kappen 3b oder 3c mit kanalisierten Flächen 3e an den Ventilsitz 6 andrückt. Unter axial ausgerichtete Flächen wird verstanden, dass die Flächen einen Normalenvektor aufweisen, welcher im wesentlichen parallel zur Längsachse des Gehäuses bzw. des Drosselkörpers verläuft. Die Kanäle 3e können dabei als Halbrohre entlang der Flächen 3d ausgebildet sein oder als Kanäle welche axial durch die Kappe 3b oder 3c führen-diese Variante wird mit der untersten Abbildung dieser Figur gezeigt. Statt Kanalisierung ist auch eine stufenförmige Ausbildung (nicht dargestellt) der Flächen 3d möglich. Der Effekt ist dem der halbrohrförmigen Kanäle ähnlich.

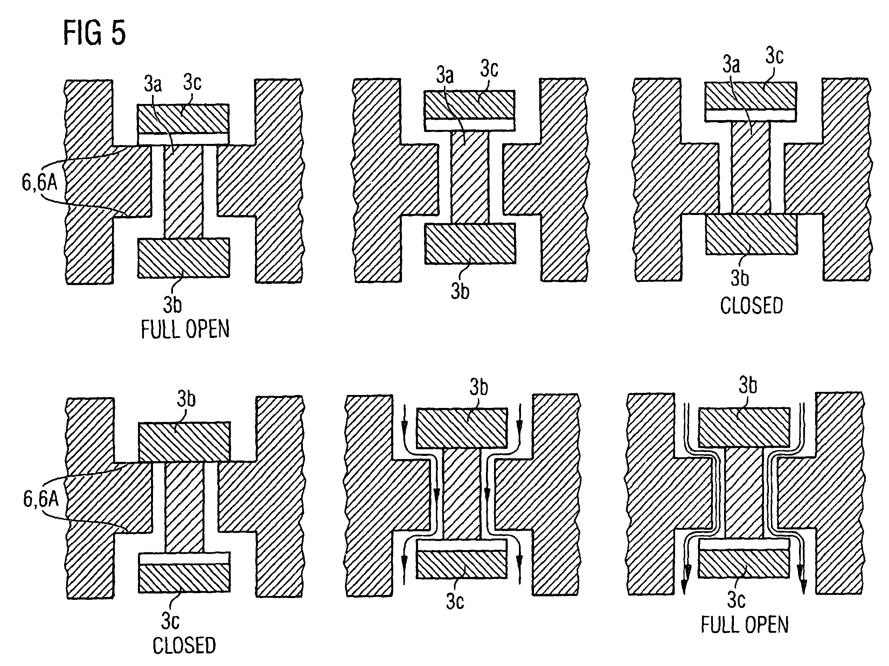

Aus **Figur 5** sind die unterschiedlichen Positionen des Drosselkörpers sichtbar, welche die *NO* "normally open" und NC "normally closed" Funktionen erfüllen. Die drei Abbildungen der oberen Reihe zeigen eine *NO-MFC* Betriebsart. Bei spannungslosem Aktor 11, welcher auf die Kappe 3b wirkt, drückt im Gegensatz dazu die auf die Kappe 3c wirkende Feder 10 das Ventil ganz auf (Full open), obwohl die obere Kappe 3c an der Ventilsitzfläche 6A andrückt. Dies ist möglich, da die Kanalisierung der Kappe 3c einen Durchfluss des Fluids zwischen dem Ventilsitz und dem Drosselkörper erlaubt (die Kanalisierung ist hier mit einer freien weißen Fläche der oberen Kappe 3c dargestellt). Wenn sich ein von unten wirkender Aktor auslängt und dadurch der Drosselköper von unten mit einem Hub beaufschlagt wird, wird zunächst der Abstand zwischen der Kappe 3b und dem Gehäuse bzw. Ventilsitz kleiner und der Strömungswiderstand in dem zwischen diesen Elementen gebildeten Spalt entsprechend größer (Abbildung Mitte obere Reihe). Schließlich berühren sich der Drosselkörper und der Ventilsitz wodurch das Ventil geschlossen wird (Abbildung ganz rechts oben).

Die untere Reihe von drei Abbildungen der Figur 5 zeigt dagegen eine *NC-MFC* Betriebsart. Hier drückt bei spannungslosem Aktor eine Feder von oben den Drosselkörper gegen den Ventilsitz. Das Ventil ist dabei ganz geschlossen, da die Kappe 3b keine Kanalisierung aufweist und somit die Kontaktstelle zwischen der axial ausgerichteten Fläche 3d der Kappe 3b und dem Ventilsitz dicht ist. Wenn sich der von unten wirkende Aktor auslängt, löst sich die Dichtkappe 3b vom Gehäuse. Mit zunehmender Aktorlängung vergrößert sich der Abstand zwischen der Kappe 3b und dem Ventilsitz 6. Bei voller Aktorspannung ist das Ventil maximal geöffnet (Full open, Abbildung ganz rechts unten). Obwohl die Kappe 3c am Ventilsitz anliegt, ist dennoch ein Durchlass des Fluids durch die Kanalisierung möglich.

Die in dieser Figur dargestellten Betriebsarten können allein durch Orientierung des Ventils 1 in Bezug auf den Aktor und das Rückstellelement bestimmt werden. Eine Orientierung des Ventils mit einer kanalisierten Kappe welche über die Membrane mit einem Aktor zusammenwirkt ergibt eine *NC* Funktion. Eine Orientierung des Ventils mit einer kanalisierten Kappe welche über die Membrane mit einem Rückstellelement zusammenwirkt ergibt eine *N0* Funktion. Es können alternativ die Positionen des Rückstellelements und des Piezoaktors miteinander ausgewechselt werden. Der Effekt ist dass eine NC Funktion des Ventils mit einer *NO* Funktion ausgetauscht wird.

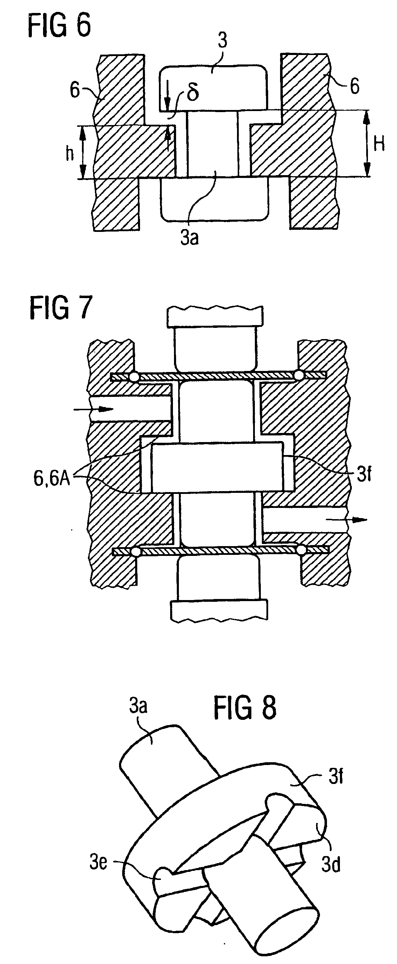

**Figur 6** zeigt die geometrische Bedingung, dass die Länge H des Zentralstifts 3a größer sein muss als die Länge h der Führung des Gehäuses für den Zentralstift. Die Länge h, bzw. die Führung für den Zentralstift 3a ist in der Regel durch die Stärke des Ventilsitzes 6 bestimmt. Im Falle einer *NO* Betriebsart muss der Höhenunterschied (d = H - h) kleiner sein als der Hub des Aktors; anderenfalls wäre es nicht möglich das Ventil zu schließen, da hier zum Schließen des Ventils die Kappe 3b (ohne Kanalisierung) vom Aktor an den Ventilsitz bis an Anschlag gedrückt werden muss um das Ventil abzudichten. Zum Schließen des Ventils bei der Betriebsart *NC* ist der Höhenunterschied d weniger kritisch, da das Rückstellelement grundsätzlich genügend Hublänge haben wird, um die Kappe 3b gegen den Ventilsitz zu drücken und somit das Ventil geschlossen wird. Allerdings würde ein nicht ausreichender Hub des Piezoaktors zu dem Ergebnis führen, dass beim Öffnen des Ventil der Spalt zwischen dem Ventilsitz und der Dichtkappe 3c nicht ausreichend ist um einen gewünschten Strömungswiderstand zu erreichen.

Der Einsatz eines zweiteiligen Drosselkörpers in einem Ventilgehäuse wird in **Figur 7** dargestellt. Wie beim hantelförmigen Drosselkörper der Figuren 3 bis 6 sind hier auch die Betriebsarten NO und NC auswählbar wobei der Drosselkörper 3 mittels des am Zentralstift mittig angebrachten, vergrößerten Querschnittsbereich 3f seine Endstellung an den Ventilsitzflächen 6A findet. Der Drosselkörper wird genauer in **Figur 8** gezeigt. Mindestens eine der axial ausgerichtete Flächen 3d weist wie beim hantelförmigen Drosselkörper Kanalisierungen 3e auf. Die Stärke oder Höhe dieses vergrößerten Querschnittsbereiches 3f muss für die Verschiebung des Drosselköpers genügend Spielraum zu den Ventilsitzen 6 erlauben. Die zwei Ventilsitzflächen des Gehäuses bilden in diesem Fall also eine geometrische Klammer um den Drosselkörper.

Die Betriebsarten werden wie in Figur 5 dargestellt übernommen, d.h., wenn die Kanalisierungen 3e dem Aktor zugewandt sind, nimmt die Ventileinheit wie in Figur 5 gezeigt eine *NC* Betriebsart auf. Wenn die Kanalisierungen 3e dem Rückstellelement zugewandt sind, dann nimmt die Ventileinheit eine *NO* Betriebsart auf.

Der Ventilsitz 6 kann grundsätzlich als Engpass im Gehäuseinnenraum betrachtet werden. Für den hantelförmigen Drosselkörper sind also zwei Engpässe im Gehäuseinnenraum ausgebildet. Im Falle eines zweiteiligen Kolbens wie aus Figur 7 oder 8 ist lediglich ein Engpass im Gehäuseinnenraum ausgebildet. Jeder Engpass weist allerdings mindestens zwei axial ausgerichtete Ventilsitzflächen 6A auf. Somit sind für beide Drosselkörper mindestens zwei Ventilsitzflächen bereitgestellt, welche mit den axial ausgerichteten Flächen der vergrößerten Querschnittsbereiche der Drosselkörper zusammenwirken.

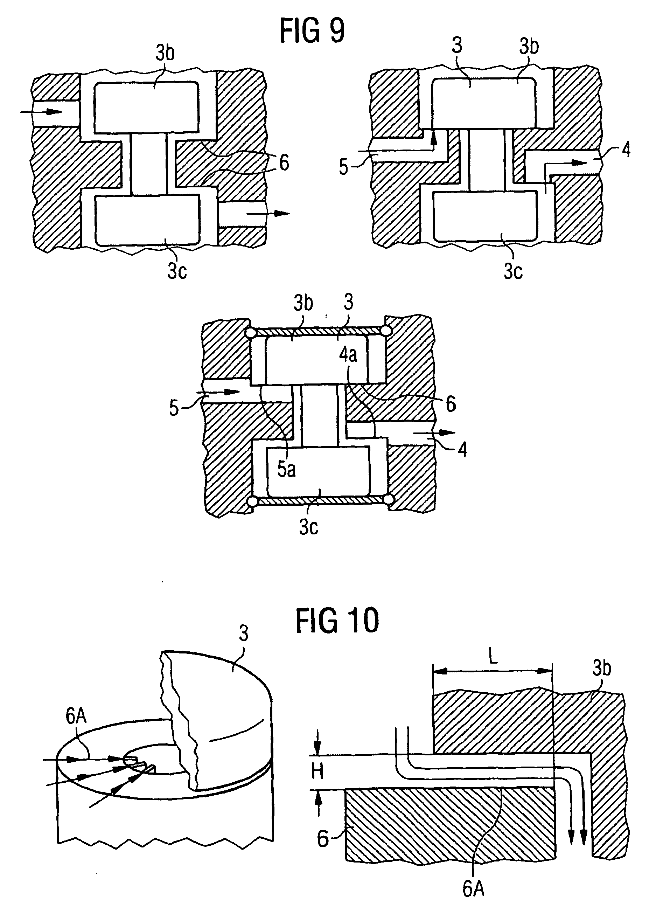

**Figur 9** zeigt verschiedene Ein- und Auslasskanäle der Ventileinheit für ein Fluid. Die Durchbohrungen 4 und 5 des Gehäuses 2 können wie dargestellt derart ausgebildet sein, dass kein kompletter Durchflussabbruch erreicht wird (Abbildung rechts), wobei die Ventileinheiten gemäß der Abbildungen links und mitte vollständig drosseln. Wenn eine der Kappen 3b oder 3c gemäß der Abbildung rechts an den Ventilsitz 6 drückt bleiben ein schmale Durchflussbereiche 5a und 4a bestehen, da die Kappen die Durchgänge 5 und 4 nicht ganz blockieren. Eine solche Ausgestaltung der Erfindung ist nützlich bei Systemen, die einen abgebremsten Durchfluss verlangen, jedoch aber nicht einen Durchflussabbruch erzielen. Aus den drei Abbildungen dieser Figur ist auch ersichtlich, dass der Einlass 5 und der Auslass 4 Teil des Ventilsitzes sein können. Der Ventilsitz kann also mit einem oder mehreren Kanälen oder Durchbohrungen versehen werden, welche in den Einlass oder in den Auslass des Gehäuses münden und somit wiederum gesamte Ein- und Ausläße für die Ventileinheit bilden.

Die **Figuren 10** bis **14** zeigen Ausführungsformen der Ventileinheit für variierte Strömungswiderstände zwischen dem Ventilsitz und dem Drosselkörper.

Grundsätzlich kommt es zu einem Druckfall zwischen Einlass und Auslass wenn ein Gas in einer Leitung fließt. Dieser Druckfall wird von verschiedenen Faktoren beeinflusst, z.B. vom Gastyp, Oberflächenrauhigkeit der Leitung (Widerstand an der Innenwand der Leitung), und von der Geometrie der Leitung. Letztere eignet sich am besten für die Kontrolle des Durchflussbereichs, da die Geometrie bei der Herstellung der Ventileinheit kontrolliert verändert werden kann. Bei einem rotationssymmetrischen Aufbau einer Ventileinheit gemäß **Figur 10** sind nur zwei Parameter zu regeln: die Höhe H des Spalts zwischen der Kappe 3b und dem Ventilsitz 6 und die Überdeckungslänge L der Kappe 3b über dem gegenüberliegenden Ventilsitz 6 oder der Ventilsitzfläche 6A. Je größer die Höhe H desto niedriger ist der Strömungswiderstand des Fluids und je größer die Fläche 6A desto größer ist der Strömungswiderstand. Die Höhe H ist vom Antrieb des Drosselkörpers begrenzt, da das Ventil sich noch regeln, schließen und öffnen lassen muss. Bei einem typischen Hub des Piezoantriebs von ca. 60 µm bleibt nicht viel Spielraum um den Strömungswiderstand zu variieren. Im Gegensatz dazu ist die Fläche 6A des Ventilsitzes jedoch frei wählbar und wird somit vorteilhafterweise benutzt um den Strömungswiderstand zu variieren.

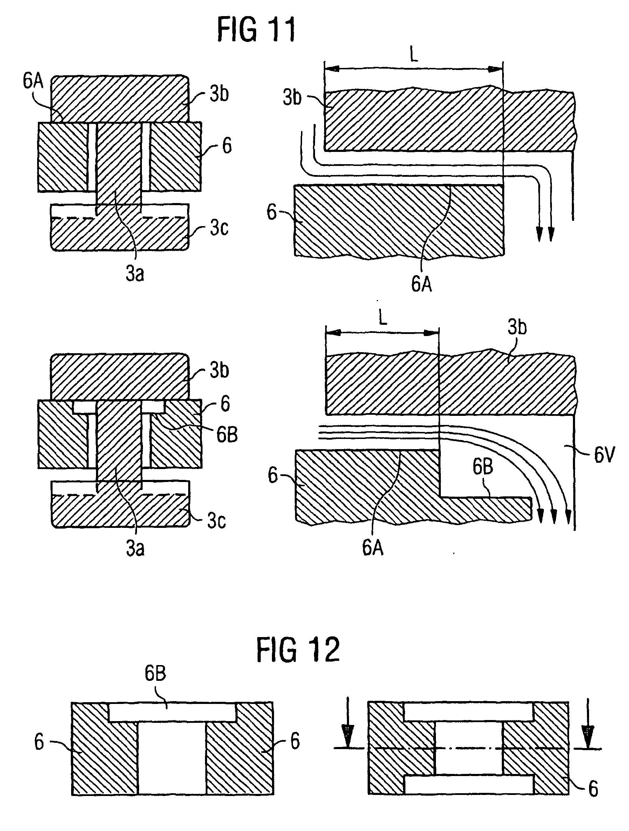

In **Figur 11** wird oben links der Grundaufbau einer in Figur 3 gezeigten Ventileinheit nochmals gezeigt. Die mit 6A markierte Fläche ist der engste Bereich im Gaspfad, also der Bereich wo der Strömungswiderstand des ganzen Ventils im Wesentlichen bestimmt wird. Der entsprechende Strömungsweg wird in der Abbildung rechts oben gezeigt; die Pfeile zeigen die Strömung. Ein zweiter, variierter Aufbau der Ventileinheit mit einem Ventilsitz mit Stufe bzw. Abnehmung 6B wird unten links gezeigt. Der Ventilsitz 6 ist mit einer Stufe versehen, welche einen breiteren Einrittskanal 6V und deshalb eine kleinere effektive Widerstandsfläche 6A erlaubt (siehe Fig. 11 unten rechts). Da über die Geometrie des Eintrittskanals 6V bzw. die Stufe die *effektive* Widerstandsfläche 6A geändert wird, ist es möglich, den maximalen Strömungswiderstand des Ventils und damit den Durchflussbereich des MFCs zu bestimmen. Je größer also der Durchmesser der Ausnehmung 6B, desto kleiner ist der Strömungswiderstand des Ventils. Wichtig zu bemerken ist dass man in ähnlicher, allerdings invertierter Weise die Geometrie des Drosselkörpers ändern kann (nicht dargestellt) um den Strömungswiderstand zu variieren. In diesem Fall würde eine axial ausgerichtete Fläche 3d des vergrößerten Querschnittsbereichs des Drosselkörpers mit einer Stufe oder Ausnehmung versehen werden.

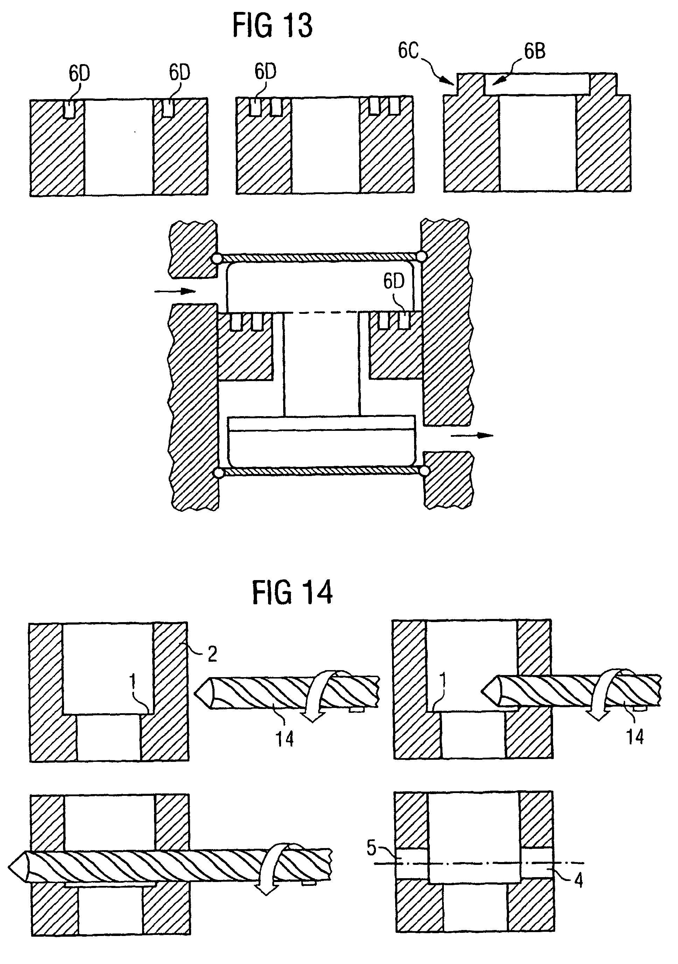

Die verschiedenen Arten den Ventilsitz mit einer Stufe, Kante oder Ausnehmung zu versehen werden in **Figuren 12** und **13** gezeigt. In **Figur 12** wird jeweils links und rechts ein unsymetrischer und ein symmetrischer Ventilsitz mit Ausnehmungen oder Kanten 6B gezeigt. **Figur 13** zeigt Ventilsitze welche mit Nuten 6D versehen sind, deren Positionen und Anzahl variierbar sind. Die Ventilsitzoberfläche kann auch derart ausgebildet sein, dass sie einen verkleinerten Außendurchmesser 6C und einen vergrößerten Innendurchmesser oder Abnehmung 6B aufweist (Abbildung rechts oben). Der Einbau solcher Ventilsitze in einer Ventileinheit ist in Figur 13 unten gezeigt.

**Figuren 14 bis 18** zeigen Herstellungsmethoden für die bisher beschriebene Ventileinheit.

In **Figur 14** wird gezeigt, wie in einem Arbeitsvorgang Ein- und Auslässe 5 und 4 des Gehäuses 2 mit einem Bohrgerät 14 hergestellt werden können. Das Gehäuse wie hier dargestellt ist bereits mit einer Kante 12 versehen, auf der ein Ventilsitz in einem späteren Arbeitsvorgang genau positioniert werden kann. Eine solche Herstellung ist besonders vorteilhaft, da sie schnell ausgeführt ist und der Ein- und Auslass auf einer Achse liegen, sodass der Einbau der Ventileinheit in einem Bausatz vereinfacht wird. Die Positionen der Ein- und Auslässe des Gehäuses werden vorzugsweise mit dem Typ des Drosselkörpers abgestimmt, d.h., in Falle eines hantelförmigen Drosselkörpers sitzen die Ein- und Auslässe jeweils optimal zwischen dem Ventilsitz 6 und den Membranen. Im Falle eines zweiteiligen Drosselkörpers wie in Figur 8 sitzen die Ein- und Auslässe des Gehäuses jeweils im wesentlichen zwischen dem vergrößerten Querschnittsbereich 3f des Drosselkörpers und den Membranen. Auf alle Fälle sind zum Zweck der Abdichtung die Ein- und Auslässe zwischen den Membranen positioniert.

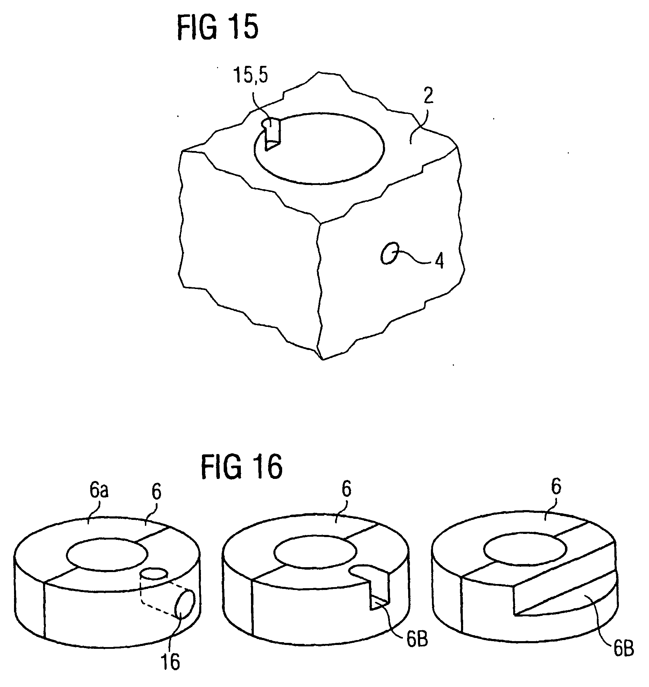

Das in **Figur 15** fertig gestellte Gehäuse weist eine Kante 12 oder Abnehmung 15 auf, welche als Ein- oder Auslass 5,4 dienen kann. Der Ein- oder Auslass 4 nimmt die bereits beschriebene, übliche Durchbohrungsform auf.

Die Herstellung eines Ventilsitzes in Form eines Ringes in einem vom Gehäuse separaten Herstellungsvorgang wird in **Figur 16** gezeigt. Die Herstellung des Ringes in einem von Gehäuse separaten Arbeitsvorgang ergibt sich als vorteilhaft, da es durch diese Maßnahme nicht mehr notwendig ist, Flächen am Gehäuse nachzubearbeiten. Der Ring 6 welcher die Rolle in der Ventileinheit des Ventilsitzes 6 aufnimmt, kann mit einer Durchbohrung 16 versehen werden, welche nach Einbau des Ventilsitzes in das Gehäuse mit einem Ein- oder Auslass des Gehäuses verbunden sein kann. Dabei kann die Durchbohrung eine Richtungsänderung aufweisen, sodass beispielsweise das Fluid in axialer, statt wie üblich in radialer Richtung, in die Ventileinheit geleitet wird, siehe auch Figur 18. Die Durchbohrung 16 kann derart positioniert sein, dass der vergrößerte Querschnittsbereich des Drosselkörpers 3f entweder die Mündung der Durchbohrung in das Ventil teilweise oder ganz deckt. Der Ring kann alternativ eine Abnehmung 6B wie bereits in Figur 11 und 12 gezeigt, aufweisen. Die Abnehmung oder Kante 6B kann dabei breitflächiger wie in der Abbildung ganz rechts dieser Figur ausgebildet sein.

Der Ring wird vorteilhafterweise mit einer nicht dargestellten geringstmöglichen Oberflächenrauhigkeit versehen, damit die Flächen 6A abdichtend mit den axial ausgerichteten Flächen des Drosselkörpers zusammenwirken können. Um eine sichere Abdichtung zwischen Gehäuse bzw. Ventilsitz und Drosselkörper zu gewährleisten wird es bevorzugt, eine Flächenrauhigkeit von 0,1µm bis 0,4µm oder kleiner zu erreichen.

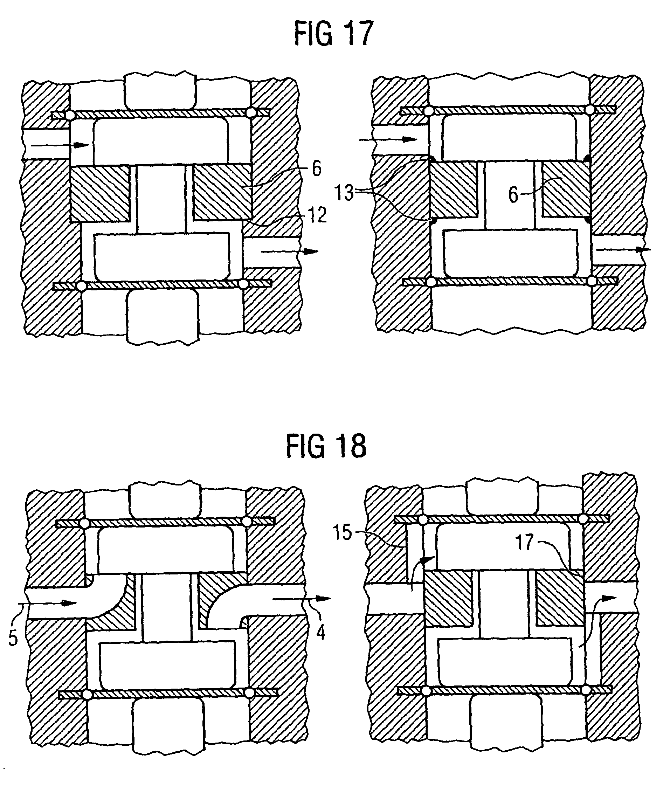

In **Figur 17** ist der Zusammenbau des Ventilsitzes und des Gehäuses gezeigt. Der Ventilsitz und das geänderte Gehäuse ist aber so konstruiert, dass sie nach der Einfügung des Ventilsitzes doch wieder eine Einheit bilden. Der Ventilsitz 6 kann z.B. auf einer Kante 12 beim Einbau in das Gehäuse gesetzt werden. Es ist möglich, den Ventilsitz nochmals an die Gehäusewand zu befestigen, z.B. durch Anschweißen von einer in der Herstellung bevorzugten Seite des Gehäuses. Das Anschweißen wird generell durch die Figur an der rechten Seite dargestellt, wobei die Schweißstellen mit 13 markiert sind. Dabei wird für eine schnellere Herstellung nur die eine Seite 13 des Ventilsitzes geschweißt. Es kann also entweder die Oberseite oder die Unterseite des Ventilsitzes an die Innenwand des Gehäuses angeschweißt werden.

Der Ventilsitz wird vorzugsweise derart genau positioniert und fest fixiert, dass die Strecke vom Eingang zum Ausgang des Gases eindeutig festgelegt ist. Dafür sind folgende Möglichkeiten gegeben:
- der Ventilsitz wird eingeschrumpft, eingefügt und dabei richtig positioniert,
- der Ventilsitz wird lediglich eingeschrumpft und eingefügt, und automatisch dadurch positioniert, dass eine Stufe bzw. Kante 12 im Gehäuse bereitgestellt ist,
- das Insert wird eingefügt, positioniert und geschweißt.

Im Falle eines zweiteiligen Drosselkörpers wie in Figur 8 gezeigt können zwei Ringe in das Gehäuse eingefügt werden, wobei in diesem Falle erst nach dem Einfügen des Drosselkörpers der zweite Ring eingefügt wird. Beide Ringe können auf Kanten 12 der Gehäuseinnenwand aufgesetzt werden. Im Gegensatz hierzu ist im Falle eines hantelförmigen Drosselkörpers lediglich das Einfügen eines Rings notwendig. Beim Einfügen des Drosselköpers in das Gehäuse wird allerdings zuerst der Zentralstift 3a und eine Kappe 3b als eine Einheit eingefügt, wobei in einem zweiten Schritt die zweite Kappe 3c von der anderen Seite des Ventilsitzes auf den bereits eingefügten und vom Ventilsitz eingeklammerten Zentralstift montiert und befestigt wird.

Um das Einfügen des Ventilsitzes in das Gehäuse zu ermöglichen wird ein thermischer Dehnungs- oder Kontraktionseffekt jeweils des Gehäuses oder des Ventilsitzes ausgenutzt. Dabei kann der Ventilsitz vor Einsatz in das Gehäuse stark gekühlt werden, beispielsweise mit flüssigem Stickstoff. Die Wiederaufwärmung des Ventilsitzes an seiner vorgesehenen Position im Gehäuse führt dann zu seiner thermischen Dehnung und anschließenden Befestigung an der Gehäuseinnenwand. Alternativ kann das Gehäuse aufgewärmt werden, wobei in der Abkühlungsphase das Gehäuse an den Ventilsitz andrückt um eine Befestigung zu erreichen.

In Figur 18 wird gezeigt, wie die Ein- und Auslässe des Gehäuses 5 und 4 mit der Durchbohrung 16 des Ventilsitzes aus Figur 16 bei der Herstellung der Ventileinheit aneinander verbunden werden können. Es kann wie in der rechten Abbildung gezeigt auch das Gehäuse derart modifiziert werden, dass Abnehmungen 15 (siehe Figur 15) sich an der Innenwand des Gehäuses schräg gegenüber liegen und der Ventilsitz an die Eckbereiche 17, welche sich zwischen der Abnehmungs-losen Innenwand und der mit der Abnehmung versehenen Innenwand befinden, befestigt werden.

Die Ventileinheit weist hinsichtlich ihrer Herstellung und hinsichtlich ihre geometrischen Merkmale mehrere Vorteile auf:
- in zwei vorläufigen Arbeitsvorgängen kann das rohe Gehäuse als Rohr und der Ventilsitz als Ring hergestellt werden,
- bei der Herstellung der Ventileinheit braucht nur ein einziges Teil, entweder der Ventilsitz 6 oder die Kappen 3a oder 3b des Drosselkörpers modifiziert werden um eine gewünschte Durchflusscharakteristik zu gewährleisten. Es ist dabei nicht notwendig, ganze Funktionseinheiten auszutauschen oder zu bearbeiten,
- die verschiedenen Ventilsitze bzw. Drosselkörper weichen von ihren ursprünglichen Design, d.h. der rohen Ringform, nur geringfügig ab. Die Änderungen können sogar rotationssymmetrisch ausgebildet sein.

Bei einer symmetrischen Ausbildung des Ventilsitzes ergeben sich zudem weitere Vorteile:
- der Ventilsitz hat keine Orientierung, und kann aus diesem Grunde nicht verkehrt in das Gehäuse eingebaut werden,
- auch wenn der Ventilsitz fest mit dem Gehäuse verbunden ist und die Ventileinheit nicht mehr gedreht werden kann, ist es immer noch möglich, den Drosselkörper umzudrehen und so die Betriebsart umzustellen (von NO auf NC und vice versa)

Es wird also grundsätzlich bevorzugt, die inneren Teile der Ventileinheit wie der Drosselkörper und der Ventilsitz, unabhängig vom Gehäuse herzustellen und erst während der Montage einzufügen.

Der Herstellungsvorgang für die gesamte Ventileinheit kann beispielsweise nach der folgenden Methode ausgeführt werden: Im massiven, rohen Gehäuse der Ventileinheit wird eine Bohrung für die Gasleitung angebracht. Danach wird das massive Gehäuse axial aufgebohrt um den Ventilsitz aufnehmen zu können. Der Ventilsitz oder der Ring wird anschließend für den Einbau des Gehäuses vorbereitet. Die Bohrungen/Abnehmungen des Ventilsitzes werden bearbeitet und die Flächen sauber geschliffen. Der so präparierte Ventilsitz wird eingefügt und im Gehäuse fixiert. Die Innenbohrung kann unter Umständen natürlich noch nachbearbeitet werden. Der Innendruchmesser kann dabei vergrößert werden und eventuell eine kleine Fase am Rand der Bohrung angebracht werden. Die übrigen Ventilteile werden eingeschoben, d.h. die Teile des Drosselkörpers in logischer Reihenfolge mit dem Ventilsitz oder den Ventilsitzen. Letztlich werden die beiden Membranen am Gehäuse fixiert.

Die Ventileinheit wird optimal in einer Dosiervorrichtung wie z.B. in einem Mass-Flow-Controller eingesetzt. Hierfür können die Steuerelemente 10 und 11 der Ventileinheit von einer Feedback-Schleife kontrolliert werden. Dabei wird der Durchfluss hinter der Ventileinheit mit einem Messgerät erfasst und die hiermit erfassten Informationen verwendet um das Öffnen und das Schließen der Ventileinheit zu kontrollieren.
Die Ventileinheit kann zur Durchflussregulierung eines Gases oder einer Flüssigkeit verwendet werden, wobei eine geeignete Membrane zur Abdichtung der Ventileinheit ausgewählt wird.

## Patentansprüche

1. Ventileinheit (1), aufweisend:
- ein hohlzylinderförmiges Gehäuse (2) dessen Innenraum an beiden Stirnseiten mit jeweils einer Membrane (8,9) abgedichtet ist und die Gehäusewand mit einem Einlass (5) und einem Auslass (4) für ein Fluid versehen ist,
- einen im Gehäuseinnenraum axial bewegbaren zylinderförmigen Drosselkörper (3), der mit seinen Endflächen an die Membranen (8,9) angrenzt und aus einem Zentralstift (3a) besteht welcher in mindestens einem Bereich einen vergrößerten Querschnitt (3b, 3c) aufweist, wobei in diesem Bereich im wesentlichen axial ausgerichtete mindestens zwei Flächen (3d) ausgebildet sind,
- zwei Ventilsitzflächen (6A) welche an der Gehäuseinnenwand ausgebildet sind wovon mindestens eine der Ventilsitzflächen (6A) und / oder mindestens eine axiale Fläche (3d) des vergrößerten Querschnitts des Drosselkörpers (3b, 3c, 3f) mit Fluid-Kanälen (3e) versehen ist, **dadurch gekennzeichnet, daß**
- der mindestens eine Bereich des vergrößerten Querschnitts des Drosselkörpers (3b, 3c, 3f) mit den Ventilsitzen (6A) in Abhängigkeit von der Stellung des Drosselkörpers (3) zusammenwirkt,
- der Drosselkörper (3) von einem von außen wirkenden Hub, welcher über eine Membrane (8,9) von einem Aktor (11) einleitbar ist, und gleichzeitig durch eine von außen wirkende Rückstellkraft, welche über eine Membrane (8,9) von einem Rückstellelement oder einem Aktor (10) einleitbar ist, beaufschlagbar ist.

2. Ventileinheit nach Anspruch 1, bei der
- der Zentralstift (3a) des Drosselkörpers (3) einen mittig positionierten Bereich des vergrößerten Querschnitts (3f) aufweist und
- zwei Ventilsitze 6A des Gehäuses eine geometrische Klammer um den Drosselkörper bilden, wobei die Einklammerung einen Spielraum für den Drosselkörper erlaubt, in dem er verschiebbar ist.

3. Ventileinheit nach Anspruch 2, bei der die Position des Einlasses (5) und des Auslasses (4) der Gehäusewand jeweils zwischen Membrane und vergrößertem Querschnittsbereich (3f) des Drosselkörpers liegt.

4. Ventileinheit nach Anspruch 1, bei der
- der Zentralstift des Drosselkörpers zwei an den Enden des Zentralstifts positionierte Bereiche des vergrößerten Querschnitts (3b, 3c) aufweist,
- die Enden des Zentralstifts mit vergrößertem Querschnitt eine geometrische Klammer um die zwei Ventilsitze 6A des Gehäuses bilden, wobei die Einklammerung der Ventilsitze mittels der Enden des Zentralstifts einen Spielraum für die Verschiebung des Drosselkörpers erlaubt.

5. Ventileinheit nach Anspruch 4, bei der die Position des Einlasses und des Auslasses 5,4 der Gehäusewand jeweils zwischen Ventilsitz (6) und Membrane (8,9) liegt.

6. Ventileinheit nach einem der Ansprüche 1 bis 5, bei der einer der Ventilsitzflächen 6A oder eine der axial ausgerichteten zwei Flächen der vergrößerten Querschnitte des Drosselkörpers 3d welche mit dem Ventilsitz zusammenwirken mit Fluid-Kanälen 3e und oder mindestens einer Stufe versehen ist.

7. Ventileinheit nach einem der Ansprüche 1 bis 6, bei der die Betriebsarten
- im Ruhezustand geschlossen und
- im Ruhezustand geöffnet der Ventileinheit durch die Position des Drosselkörpers in Ruhestellung in Kombination mit der Positionierung der Fluidkanäle bestimmbar sind.

8. Ventileinheit nach einem der Ansprüche 1 bis 7, bei der der Fluidkanal eines Ventilsitzes mit einem Einlass 5 oder mit einem Auslass 4 der Gehäusewand verbunden ist.

9. Verwendung einer Ventileinheit nach einem der Ansprüche 1 bis 8 in einer Dosiervorrichtung.

10. Verwendung der Ventileinheit nach Anspruch 9 in einem Mass-Flow-Controller.

11. Verwendung nach einem der Ansprüche 9 oder 10, bei der vor Endmontage der Ventileinheit in die Dosiervorrichtung eines der Betriebsarten
- im Ruhezustand geschlossen
- im Ruhezustand geöffnet
auswählbar ist.

12. Verwendung der Ventileinheit nach einem der Ansprüche 9 bis 11, bei der die Ventileinheit zur Durchlassregulierung eines Fluids eingesetzt wird.

13. Verwendung der Ventileinheit nach Anspruch 12, bei der die Durchlassregulierung mittels einer Feedback-Schleife bestimmt wird.

14. Verfahren zur Herstellung einer Ventileinheit nach einem der Ansprüche 1 bis 8, bei dem
- das rohe Hohlzylindergehäuse hergestellt wird,
- der Ventilsitz in Form eines Ringes hergestellt wird,
- mindestens ein Ventilsitz in den Innenraum des Gehäuses eingefügt, positioniert und befestigt wird,
- ein Teil eines Drosselkörpers in das Gehäuse eingefügt wird, sodass eine Fläche des vergrößerten Querschnitts auf einen Ventilsitz anliegt und
- ein zweiter Ventilsitz eingefügt wird um den Drosselkörper einzuklammern oder
- ein Ende eines Drosselkörpers mit vergrößertem Querschnitt auf den Zentralstift aufgesetzt wird um den Ventilsitz einzuklammern
- jeweils eine Membrane an eine Stirnseite des Gehäuses fixiert wird.

15. Verfahren nach Anspruch 14, bei dem das Gehäuse mit mindestens einem Einlass und mindestens einem Auslass versehen wird.

16. Verfahren nach Anspruch 15, bei dem der Einlass und der Auslass in einem Durchbohrungsvorgang derart hergestellt werden, dass sie sich in der axialen Position gegenüber liegen.

17. Verfahren nach einem der Ansprüche 14 bis 16, bei dem die Innenwand des Gehäuses mit einer Stufe, Kante oder Ausnehmung versehen wird.

18. Verfahren nach einem der Ansprüche 14 bis 16, bei dem der Ventilsitz vor Einsatz in das Gehäuse durchbohrt wird und / oder die Innenwand des Ventilsitzes mit einer Stufe, Kante oder Ausnehmung versehen wird.

19. Verfahren nach Anspruch 18, bei dem der Ventilsitz mit einer Oberflächenrauhigkeit versehen wird.

20. Verfahren nach einem der Ansprüche 18 oder 19, bei dem eine der axial ausgerichteten Flächen des Ventilsitzes mit Vertiefungen versehen wird.

21. Verfahren nach einem der Ansprüche 16 oder 17, bei dem der Ventilsitz beim Einsatz in das Gehäuse auf die Kante oder Stufe des Gehäuses positioniert und befestigt wird.

## Claims

1. Valve unit (1), comprising:
- a hollow-cylindrical housing (2) whose interior is sealed on both end faces in each case by a diaphragm (8, 9) and the housing wall is provided with an inlet (5) and an outlet (4) for a fluid,
- a cylindrical flow restrictor (3) which can be axially displaced inside the housing interior, which is adjoined by means of its end faces to said diaphragms (8, 9) and which consists of a central pin (3a) that in at least one area has an enlarged cross-section (3b, 3c), with at least two surfaces (3d) that are essentially axially orientated being embodied in said area,
- two valve seat surfaces (6A) which are embodied on the housing inner wall, of which at least one of the valve seat surfaces (6A) and/or at least one axial surface (3d) of the enlarged cross-section of the flow restrictor (3b, 3c, 3f) are/is provided with fluid channels (3e),
**characterised in that**
- the at least one area of the enlarged cross-section of the flow restrictor (3b, 3c, 3f) interacts with the valve seats (6A) as a function of the position of the flow restrictor (3),
- the flow restrictor (3) can be subjected to the action of a stroke which acts from the outside and which can be initiated by an actuator (11) via a diaphragm (8, 9) and at the same time can be subjected to the action of a restoring force which acts from the outside and which can be initiated by a restoring element or an actuator (10) via a diaphragm (8, 9).

2. Valve unit according to claim 1, wherein
- the central pin (3a) of the flow restrictor (3) has a centrally positioned area of the enlarged cross-section (3f) and
- two valve seats (6A) of the housing form a geometric bracket around the flow restrictor, the bracketing permitting a margin of clearance for the flow restrictor in which it can be displaced.

3. Valve unit according to claim 2, wherein the position of the inlet (5) and the outlet (4) of the housing wall is in each case situated between diaphragm and enlarged cross-sectional area (3f) of the flow restrictor.

4. Valve unit according to claim 1, wherein
- the central pin of the flow restrictor has two areas of the enlarged cross-section (3b, 3c) positioned at the ends of the central pin,
- the ends of the central pin with enlarged cross-section form a geometric bracket around the two valve seats (6A) of the housing, the bracketing of the valve seats by means of the ends of the central pin permitting a margin of clearance for the displacement of the flow restrictor.

5. Valve unit according to claim 4, wherein the position of the inlet and the outlet 5, 4 of the housing wall is in each case situated between valve seat (6) and diaphragm (8, 9).

6. Valve unit according to one of the claims 1 to 5, wherein one of the valve seat surfaces (6A) or one of the two axially orientated surfaces of the enlarged cross-section of the flow restrictor (3d) which interact with the valve seat is provided with fluid channels 3e and or at least one step.

7. Valve unit according to one of the claims 1 to 6, wherein the modes of operation
- closed in the idle state and
- open in the idle state of the valve unit can be determined by the position of the flow restrictor in the idle setting in combination with the positioning of the fluid channels.

8. Valve unit according to one of the claims 1 to 7, wherein the fluid channel of a valve seat is connected to an inlet (5) or an outlet (4) of the housing wall.

9. Use of a valve unit according to one of the claims 1 to 8 in a dosing device.

10. Use of the valve unit according to claim 9 in a mass flow controller.

11. Use of the valve unit according to one of the claims 9 or 10, wherein before final assembly of the valve unit in the dosing device one of the modes of operation
- closed in the idle state
- open in the idle state
can be selected.

12. Use of the valve unit according to one of the claims 9 to 11, wherein the valve unit is used for the flow regulation of a fluid.

13. Use of the valve unit according to claim 12, wherein the flow regulation is determined by means of a feedback loop.

14. Method for manufacturing a valve unit according to one of the claims 1 to 8, wherein
- the unfinished hollow-cylindrical housing is manufactured,
- the valve seat is manufactured in the form of a ring,
- at least one valve seat is inserted, positioned and secured in the interior of the housing,
- part of a flow restrictor is inserted into the housing so that a surface of the enlarged cross-section of the flow restrictor rests against a valve seat and
- a second valve seat is inserted in order to enclose the flow restrictor in bracket fashion or
- one end of a flow restrictor having an enlarged cross-section is mounted onto the central pin in order to enclose the valve seat in bracket fashion,
- a diaphragm is fixed to each face of the housing.

15. Method according to claim 14, wherein the housing is provided with at least one inlet and at least one outlet.

16. Method according to claim 15, wherein the inlet and the outlet are manufactured in a hole-drilling operation in such a way that they are situated opposite each other in the axial position.

17. Method according to one of the claims 14 to 16, wherein the inner wall of the housing is provided with a step, edge or recess.

18. Method according to one of the claims 14 to 16, wherein the valve seat is drilled before being installed in the housing and/or the inner wall of the valve seat is provided with a step, edge or recess.

19. Method according to claim 18, wherein the valve seat is provided with a surface roughness.

20. Method according to one of the claims 18 or 19, wherein one of the axially orientated surfaces of the valve seat is provided with indentations.

21. Method according to one of the claims 16 or 17, wherein when being installed in the housing the valve seat is positioned onto the edge or step of the housing and secured in place.

## Revendications

1. Ensemble de soupape (1) comprenant :
- un boîtier (2) en forme de cylindre creux, dont l'intérieur est rendu étanche, sur les deux faces frontales, par respectivement une membrane (8, 9) et la paroi de boîtier est pourvue d'une entrée (5) et d'une sortie (4) pour un fluide,
- un corps d'étranglement (3) en forme de cylindre pouvant se déplacer axialement à l'intérieur du boîtier, dont les surfaces terminales sont contiguës aux membranes (8, 9) et qui est constitué d'une tige centrale (3a) laquelle présente dans au moins une zone une section transversale agrandie (3b, 3c), dans cette zone étant formées au moins deux surfaces (3d) orientées essentiellement axialement,
- deux surfaces de siège de soupape (6A) formées sur la paroi intérieure du boîtier, au moins l'une des surfaces de siège de soupape (6A) et/ou au moins une surface axiale (3d) de la section transversale agrandie du corps d'étranglement (3b, 3c, 3f) étant pourvue de canaux (3e) pour le fluide,
**caractérisé en ce que**
- ladite au moins une zone de la section transversale agrandie du corps d'étranglement (3b, 3c, 3f) coopère avec les sièges de soupape (6A) en fonction de la position du corps d'étranglement (3),
- le corps d'étranglement (3) peut être soumis à un mouvement de levage agissant de l'extérieur, lequel peut être initié à travers une membrane (8, 9) par un actionneur (11), et simultanément à une force de rappel agissant de l'extérieur, laquelle peut être initiée à travers une membrane (8, 9) par un élément de rappel ou un actionneur (10).

2. Ensemble de soupape selon la revendication 1, dans lequel
- la tige centrale (3a) du corps d'étranglement (3) présente une zone centrée de la section transversale agrandie (3f) et
- deux sièges de soupape 6A du boîtier forment un serrage géométrique autour du corps d'étranglement, l'enserrage offrant un espace de battement pour le corps d'étranglement, dans lequel il peut se déplacer.

3. Ensemble de soupape selon la revendication 2, dans lequel la position de l'entrée (5) et de la sortie (4) de la paroi de boîtier se trouve à chaque fois entre la membrane et la zone de section transversale agrandie (3f) du corps d'étranglement.

4. Ensemble de soupape selon la revendication 1, dans lequel
- la tige centrale du corps d'étranglement présente deux zones de la section transversale agrandie (3b, 3c), positionnées aux extrémités de la tige centrale,
- les extrémités de la tige centrale de section transversale agrandie forment un serrage géométrique autour des deux sièges de soupape 6A du boîtier, l'enserrage des sièges de soupape au moyen des extrémités de la tige centrale offrant un espace de battement pour le déplacement du corps d'étranglement.

5. Ensemble de soupape selon la revendication 4, dans lequel la position de l'entrée et de la sortie 5,4 de la paroi de boîtier se trouve à chaque fois entre le siège de soupape (6) et la membrane (8, 9).

6. Ensemble de soupape selon l'une des revendications 1 à 5, dans lequel l'une des surfaces de siège de soupape 6A ou l'une des deux surfaces orientées axialement des sections transversales agrandies du corps d'étranglement 3d, qui coopèrent avec le siège de soupape, est pourvue de canaux 3e pour le fluide et/ou d'au moins un gradin.

7. Ensemble de soupape selon l'une des revendications 1 à 6, dans lequel les modes de fonctionnement
- fermé au repos et
- ouvert au repos de l'ensemble de soupape peuvent être déterminés par la position du corps d'étranglement au repos en combinaison avec le positionnement des canaux pour le fluide.

8. Ensemble de soupape selon l'une des revendications 1 à 7, dans lequel le canal pour le fluide d'un siège de soupape est relié à une entrée 5 ou à une sortie 4 de la paroi de boîtier.

9. Utilisation d'un ensemble de soupape selon l'une des revendications 1 à 8 dans un dispositif de dosage.

10. Utilisation de l'ensemble de soupape selon la revendication 9 dans un Mass Flow Controller.

11. Utilisation selon l'une des revendications 9 ou 10, dans laquelle on peut sélectionner avant le montage final de l'ensemble de soupape dans le dispositif de dosage l'un des modes de fonctionnement
- fermé au repos
- ouvert au repos.

12. Utilisation de l'ensemble de soupape selon l'une des revendications 9 ou 11, dans laquelle l'ensemble de soupape est utilisée pour la régulation du débit d'un fluide.

13. Utilisation de l'ensemble de soupape selon la revendication 12, dans laquelle la régulation du débit est déterminée au moyen d'une boucle de retour.

14. Procédé de fabrication d'un ensemble de soupape selon l'une des revendications 1 à 8, dans lequel
- on fabrique le boîtier brut en forme de cylindre creux,
- on fabrique le siège de soupape en forme d'anneau,
- on insère, on positionne et on fixe au moins un siège de soupape à l'intérieur du boîtier,
- on insère une partie d'un corps d'étranglement dans le boîtier de manière à ce qu'une surface de la section transversale agrandie soit en contact avec un siège de soupape et
- on insère un deuxième siège de soupape pour enserrer le corps d'étranglement ou
- on pose une extrémité d'un corps d'étranglement de section transversale agrandie sur la tige centrale pour enserrer le siège de soupape,
- on fixe respectivement une membrane sur une face frontale du boîtier.

15. Procédé selon la revendication 14, dans lequel on munit le boîtier d'au moins une entrée et d'au moins une sortie.

16. Procédé selon la revendication 15, dans lequel on réalise l'entrée et la sortie dans une opération de perçage de telle manière qu'elles se trouvent en position axiale en regard l'une de l'autre.

17. Procédé selon l'une des revendications 14 à 16, dans lequel on munit la paroi intérieure du boîtier d'un gradin, d'un rebord ou d'un creux.

18. Procédé selon l'une des revendications 14 à 16, dans lequel on perce le siège de soupape avant sa mise en place dans le boîtier et/ou on munit la paroi intérieure du siège de soupape d'un gradin, d'un rebord ou d'un creux.

19. Procédé selon la revendication 18, dans lequel on confère au siège de soupape une rugosité de surface.

20. Procédé selon l'une des revendications 18 ou 19, dans lequel on munit l'une des surfaces orientées axialement de creux.

21. Procédé selon l'une des revendications 16 ou 17, dans lequel on positionne et on fixe le siège de soupape lors de sa mise en place dans le boîtier sur le rebord ou le gradin du boîtier.
